# EUROPÄISCHE PATENTSCHRIFT

(11) **EP 1 847 109 B1**
(45) Veröffentlichungstag und Bekanntmachung des Hinweises auf die Patenterteilung: **11.04.2012**
(21) Anmeldenummer: 05824869.1
(22) Anmeldetag: 09.12.2005
(51) Int. Cl.: H04M 7/00, H04L 12/66, H04Q 3/00

(54) **VERFAHREN ZUR STEUERUNG EINES GATEWAYS MITTELS EINES DAZWISCHENLIEGENDEN PROTOKOLLS UND GATEWAY ZUR DURCHFÜHRUNG DES VERFAHRENS**
METHOD FOR CONTROLLING A GATEWAY BY MEANS OF A PROTOCOL ARRANGED THEREBETWEEN AND GATEWAY FOR CARRYING OUT SAID METHOD
PROCEDE POUR COMMANDER UNE PASSERELLE AU MOYEN D'UN PROTOCOLE INTERCALE ET PASSERELLE POUR LA MISE EN OEUVRE DUDIT PROCEDE

(30) Priorität: 10.02.2005 DE 102005006631
(43) Veröffentlichungstag der Anmeldung: 24.10.2007
(73) Patentinhaber: Teles AG Informationstechnologien, 10587 Berlin (DE)
(72) Erfinder: PAETSCH, Frank, 12357 Berlin (DE); MARHOFF, Christian, 13409 Berlin (DE)
(74) Vertreter: Müller, Wolfram Hubertus
(86) Internationale Anmeldenummer: PCT/DE2005/002244
(87) Internationale Veröffentlichungsnummer: WO 2006/084424

(56) Entgegenhaltungen:
- WO-A-00/76107
- WO-A-02/28123
- US-A1- 2005 190 743
- PATENT ABSTRACTS OF JAPAN Bd. 015, Nr. 401 (E-1121), 11. Oktober 1991 (1991-10-11) & JP 03 162154 A (NEC SOFTWARE LTD), 12. Juli 1991 (1991-07-12)

## Beschreibung

Die Erfindung betrifft ein Verfahren zur Steuerung eines Gateways, der ein erstes Kommunikationsnetz und ein zweites Kommunikationsnetz miteinander verbindet. Die Erfindung betrifft des weiteren einen Gateway zur Durchführung des Verfahrens.

### Hintergrund der Erfindung

Unter dem Schlagwort "NGN" (Next Generation Network) wird eine Netzwerkarchitektur verstanden, die die Funktionen herkömmlicher öffentlicher Telefonnetze und des Internets integriert und dabei unter Verwendung einer einheitlichen Signalisierung in gleichberechtigter Weise die Übertragung von Sprache, Bildern und Daten auf der Grundlage der Paketvermittlungstechnik bereitstellt.

Zur Realisierung eines NGN-Netzwerkes ist der Einsatz von sogenannten Media-Gateway-Controllern, auch als Soft-Switches oder Call-Agents bezeichnet, bekannt, die die Steuerung und Verbindungsvermittlung sogenannter Media-Gateways übernehmen. Ein Media-Gateway ist typischerweise ein Netzwerkelement, das einen Übergang zwischen einem leitungsvermittelten Netz wie dem öffentlichen Telefonnetz (PSTN) und einem paketvermittelten Netz wie insbesondere dem Internet ermöglicht. Dabei ist vorgesehen, dass die "Intelligenz" zur Steuerung und zum Routen von Verbindungen außerhalb eines solchen Media-Gateways sitzt und bei einer externen Instanz realasiert ist, nämlich dem erwähnten Media-Gateway-Controller. Die Intelligenz zur Steuerung und Vermittlung von Verbindungen und Diensten ist somit logisch getrennt von der Übertragung und dem Routen von Datenpaketen. Dieses Prinzip ist auch aus der bekannten SS7-Signalisierung bekannt.

Ein bekanntes Protokoll zur Steuerung von Media-Gateways ist das MGCP-Protokoll (MGCP = Media Gateway Control Protokoll), das durch die IETF und die ITU-T definiert ist. Weiterentwicklungen sind die Protokolle Megaco und H.248, wobei Megaco der IETF-Name und H.248 der ITU-T-Name ist. Die Signalisierungslogik sitzt in den Media-Gateway Controllern.

Ein NGN-Netz mit MGCP-Protokoll (nachfolgend auch als MGCP-Netz bezeichnet) ermöglicht mittels des MGCP-Protokolls von einer dezentralen Einheit aus, dem Media-Gateway-Controller, eine Steuerung der Datenströme in einem Media-Gateway bzw. das Switchen und Routen solcher Datenströme sowie einen Auf- und -abbau von Verbindungen. Es ist dazu erforderlich, dass die Media-Gateways eines NGN-Netzes Signalisierungsdaten zum Media-Gateway-Controller senden bzw. von diesem empfangen können. Das MGCP-Protokoll ist dabei in der Lage, mit bekannten Signalisierungen anderer Netze zusammenzuarbeiten. Insbesondere ist das MGCP-Protokoll in der Lage, mit den Protokollen SS7 und DSS1 des öffentlichen Telekommunikationsnetzes zusammenzuarbeiten und hierzu Signalisierungsdaten gemäß den SS7- und DSS1-Protokollen in entsprechende Signalisierungsdaten gemäß dem MGCP-Protokoll zu konvertieren und umgekehrt.

Es kann allerdings das Problem auftreten, dass ein Media-Gateway eine Schnittstelle und auf dieser Schnittstelle Steuerprotokolle realisiert hat, die das MGCP-Netz nicht erkennt und mit denen es dementsprechend zur Steuerung des Media-Gateways nicht zusammenarbeiten kann. Dieses Problem tritt insbesondere dann auf, wenn individuelle oder proprietäre Schnittstellen in einem Media-Gateway realisiert sind.

Beispiele für die Zusammenführung unterschiedlicher Kommunikationsnetze sind aus den Druckschriften WO 00/76107 A, WO 02/28123 A sowie den Patent Abstracts of Japan JP 03 162 154 A bekannt.

### Aufgabe der Erfindung

Der vorliegenden Erfindung liegt die Aufgabe zugrunde, ein Verfahren zur Steuerung eines Gateways, der ein erstes Kommunikationsnetz und ein zweites Kommunikationsnetz miteinander verbindet, sowie einen Gateway zur Durchführung des Verfahrens zur Verfügung zu stellen, die es ermöglichen, unabhängig von den in einem Gateway vorhandenen Schnittstellen eine einheitliche Signalisierung von und zu einem Media-Gateway-Controller zu realisieren.

### Zusammenfassung der Erfindung

Diese Aufgabe wird erfindungsgemäß durch ein Verfahren mit den Merkmalen des Anspruchs 1 und einen Gateway mit den merkmalen des Anspruchs 10 gelöst. Bevorzugte und vorteilhafte Ausgestaltungen der Erfindungen sind in den Unteransprüchen angegeben.

Danach weist das Gateway erfindungsgemäß eine erste Schnittstelle zu einem ersten Kommunikationsnetz und eine zweite Schnittstelle zu einem zweiten Kommunikationsnetz auf. Es erfolgt die Steuerung der ersten Schnittstelle mit Steuerbefehlen eines zweitens Protokolls. Der Gateway bildet die Steuerbefehle des zweiten Protokolls auf Signalisierungsbefehle eines dritten Protokolls ab, die einem ersten Protokoll, dass das zweite Kommunikationsnetz verwendet, bekannt sind und/oder die in das erste Protokoll integriert werden können. Damit wird erreicht, dass eine externe Steuerung des Gateways mittels Signalisierungsbefehlen des ersten Protokolls und durch einen Media-Gateway Controller des zweiten Kommunikationsnetzes erfolgen kann. Die erwähnte Abbildung von Steuerbefehlen des zweiten Protokolls auf Signalisierungsbefehle eines dritten Protokolls kann natürlich in beiden Richtungen erfolgen, d.h. es werden Steuerbefehle des zweiten Protokolls auf Signalisierungsbefehle des dritten Protokolls und Signalisierungsbefehle des dritten Protokolls auf Steuerbefehle des zweiten Protokolls abgebildet.

Die erfindungsgemäße Lösung beruht somit auf dem Gedanken, im Media-Gateway eine Signalisierung zu simulieren, die das vom Media-Gateway-Controller verwendete Protokoll erkennt und in eigene Steuer- und Signalisierungsbefehle umwandelt oder in eigene Steuer- und Signalisierungsbefehle integriert. Hierdurch wird eine einheitliche Signalisierung zum Media-Gateway-Controller ermöglicht, ohne dass neue Schnittstellen dem Media-Gateway-Controller bekannt gemacht werden müssen. Vielmehr können die Anzahl der verwalteten zu signalisierenden Schnittstellen und der entsprechende Verwaltungsaufwand jeder einzelnen Signalisierungsschnittstelle minimiert werden.

Eine Involvierung eines vorhandenen Media-Gateway-Controllers zur standardkonformen Steuerung eines Media-Gateways wird ohne die Notwendigkeit, gegenüber dem Media-Gateway-Controller eine zusätzliche Schnittstelle anzuzeigen und zu definieren, erreicht. Die erfindungsgemäße Lösung ermöglicht es, dass die von einem Media-Gateway zum Media-Gateway-Controller gesendete bzw. empfangene Signalisierung immer gleich und unabhängig von den konkret verwendeten Schnittstellen des Media-Gateways ist.

Bei dem ersten Kommunikationsnetz handelt es sich bevorzugt um ein Mobilfunknetz und bei dem zweiten Kommunikationsnetz um das Internet, auch wenn die Erfindung hierauf keineswegs beschränkt ist. Die erste Schnittstelle ist dabei eine Mobilfunk-Schnittstelle, die einen oder eine Mehrzahl von Mobilfunk-Kanälen verwaltet. Dabei ist bevorzugt vorgesehen, dass das Gateway eine Mehrzahl von Einsteckkarten aufweist, die eine Zuordnung und Anmeldung zu bzw. bei einem Mobilfunknetz ermöglichen, sowie eine Mehrzahl von Funkmodulen, die jeweils zusammen mit einer Einsteckkarte eine Mobilfunkkanal realisieren. Dabei steuert die erste Schnittstelle die Mobilfunkkanäle. Die Einsteckkarten sind bevorzugt als SIM-Karten ausgebildet.

Das dritte Protokoll ist beispielsweise das SS7-Protokoll oder das DSS1-Protokoll. Grundsätzlich kann jedoch jedes Protokoll verwendet werden, das das erste Protokoll bzw. der Media Gateway Controller kennt.

Als erstes Protokoll wird bevorzugt das Protokoll MGCP, das Protokoll H.248, das Protokoll Megaco, das Protokoll SIGTRAN oder das Protokoll SIP-T verwendet.

In einer bevorzugten Ausgestaltung emuliert das Gateway Signalisierungsbefehle des dritten Protokolls, die keine Entsprechung im zweiten Protokoll besitzen, damit das erste Protokoll die Signalisierungsbefehle des dritten Protokolls vollständig erfassen und übersetzen kann.

Die Erfindung wird bevorzugt zur Verbindungssteuerung von Telefongesprächen oder Telefonnachrichten, insbesondere zur Realisierung einer VoIP-Telefonie eingesetzt.

### Beschreibung eines bevorzugten Ausführungsbeispiels der Erfindung

Die Erfindung wird nachfolgend unter Bezugnahme auf die Figuren der Zeichnung anhand eines Ausführungsbeispiels näher erläutert. Es zeigen:
- Figur 1: eine NGN-Netzwerk-Architektur zur Realisierung einer einheitlichen Signalisierung zwischen einem Media-Gateway und einem Media-Gatesway Controller;
- Figur 2: ein Ausführungsbeispiel zur Realisierung eines Mobilfunk-Media-Gateways; und
- Figur 3: ein Ablaufdiagramm der Signalisierung beim Rufaufbau und Rufabbau.

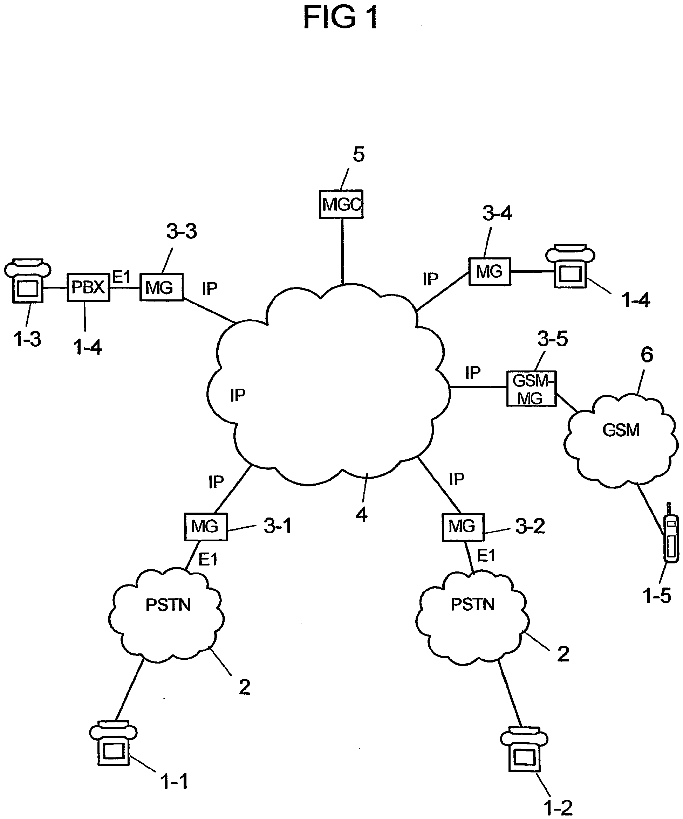

Die Figur 1 zeigt die Netzwerk-Architektur eines NGN-Netzes in einer möglichen Ausgestaltung. Ein erstes Endgerät 1-1 ist über einen üblichen TAE- oder ISDN-Anschluss entweder unmittelbar oder unter Zwischenschaltung einer TK-Anlage (nicht dargestellt) mit dem öffentlichen Telekommunikationsnetz 2 bzw. der lokalen Ortsvermittlungsstelle des öffentlichen Telekommunikationsnetz 2 verbunden. Das öffentliche Telekommunikationsnetz 2 ist ein Leitungsvermittlungsnetz und wird auch als PSTN-Netz bezeichnet (PSTN = Plublic Switched Telephony Network).

Das PSTN-Netz 2 ist über ein Media-Gateway 3-1 mit einem Netz 4 verbunden, in dem Daten paketvermittelt gemäß dem IP-Protokoll übertragen werden. Dabei handelt es sich insbesondere um das Internet. Das Media-Gateway 3-1 terminiert dabei zum PSTN-Netz hin eine E1-Leitung des PSTN-Netzes 2. Eine E1-Leitung besitzt eine Bandbreite von 2048 Mbit/s und ist unterteilt in 30 B-Kanäle und einen D-Kanal. Zum Internet 4 hin sendet das Media-Gateway 3-1 IP-Pakete aus bzw. empfängt solche. Das Media-Gateway 3-1 konvertiert somit die zu übertragenen Daten in IP-Datenpakete und sendet diese an das Internet 4. Dabei ist es notwendig, die in dem PSTN-Netz verwendete Signalisierung in eine Signalisierung im IP-Netz zu konvertieren. Hierbei wird ggf. der Signalisierungskanal mit Hilfe des MGCP-Protokolls zu einem Media Gateway Controller 5 transportiert.

Es wird darauf hingewiesen, dass das Media-Gateway 3-1 nicht selbst Signalisierungsaufgaben (z.B. zum Verbindungsauf- und -abbau) sowie Steueraufgaben (zum Routen der zu übertragenen Daten bzw. zum Steuern der involvierten Kanäle) ausführt, sondern diese durch einen Media-Gateway-Controller 5 realisiert werden, der ebenfalls mit dem Internet 4 verbunden ist. Der Media-Gateway-Controller 5 kann dabei aus mehreren Modulen bestehen, die auf verschiedenen Computern enthalten sind. Der Media-Gateway-Controller 5 nimmt ein "soft switching" des Medial-Gateways 3-1 vor und übernimmt sämtliche Signalisierungs- und Steueraufgaben für das Media-Gateway 3-1. Die entsprechenden Signalisierungsdaten werden als Datenpakete über das Internet 4 übertragen.

In entsprechender Weise ist ein weiteres Endgerät 1-2 an das PSTN-Netz 2 und von diesem über einen Media-Gateway 3-2 mit dem Internet 4 verbunden. Des Weiteren ist eine Anordnung vorgesehen, bei der ein Endgerät 1-3 über eine TK-Anlage 1-4 und eine E1-Leitung direkt an ein Media-Gateway 3-3 angeschlossen ist. Ebenso ist vorgesehen sein, dass ein Endgerät 1-4 direkt an ein Media-Gateway 3-4 angeschlossen ist.

Schließlich zeigt die Figur 1 eine Anordnung, bei der ein Mobilfunktelefon 1-5 über ein Mobilfunknetz 6 mit einem Mobilfunk-Media-Gateway 3-5 verbunden ist, das wiederum eine Schnittetelle zum Internet 4 bildet. Das Mobilfunknetz 6 ist beispielsweise ein GSM-Netz, kann jedoch grundsätzlich jedem beliebigen Mobilfunk-Standard folgen.

Die weiteren Media-Gateways 3-2, 3-3, 3-4, 3-5 werden ebenfalls durch den Media-Gateway-Controller 5 gesteuert. Die Steuerung erfolgt durch das MGCP-Protokoll, wobei entsprechende Protokoll-Modulen in den Media-Gateways 3-1, 3-2, 3-3, 3-4, 3-5 enthalten sind.

Weitere Endgeräte können beispielsweise über WLAN-Technik oder über DSL-Technik und entsprechende Media-Gateways mit dem Internet 4 verbunden sein, wobei solche Media-Gateways ebenfalls über den Media-Gateway-Controller 5 gesteuert werden.

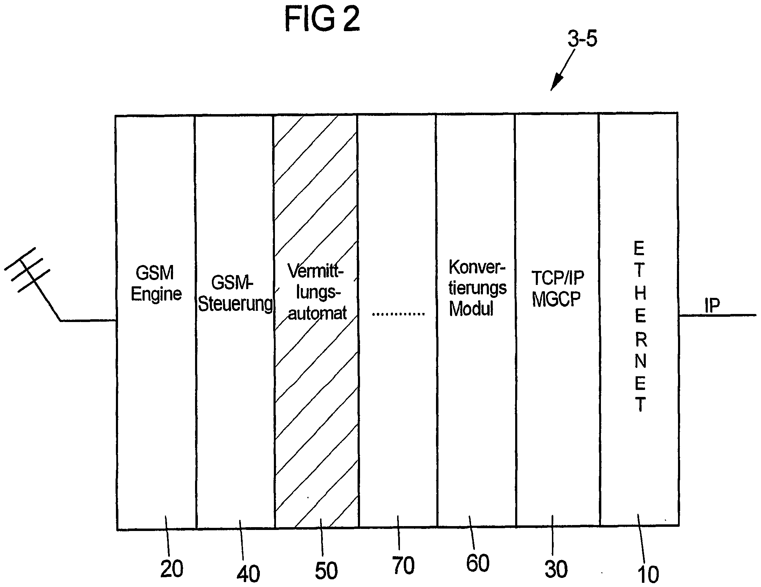

Es wird darauf hingewiesen, dass die Endgeräte 1-1, ..., 1-5 lediglich beispielhaft als Telefone ausgebildet sind. Grundsätzlich kann es sich bei den Endgeräten um beliebige Telekommunikationsendgeräte handeln, insbesondere auch um PCs. Die Figur 2 zeigt eine mögliche Ausgestaltung des in der Figur 1 dargestellten Media-Gateways 3-5, das eine Schnittstelle zwischen dem GSM-Netz 6 und dem Internet 4 bereitstellt. Bei dem Media-Controller 3-5 handelt es sich um ein sogenanntes Mobilfunk-Gateway, das eine Mehrzahl von SIM-Karten und GSM-Funkmodulen aufweist, wobei jeweils eine SIM-Karte und ein Funkmodul einen Mobilfunkkanal bereitstellen. Das Media-Gateway 3-5 verwaltet eine Vielzahl solcher Mobilfunkkanäle. Dabei kann auch vorgesehen sein, dass das Mobilfunk-Gateway 3-5 einen Netzzugang zu einer Mehrzahl unterschiedlicher Mobilfunknetze bereitstellt, wobei es hierzu SIM-Karten unterschiedlicher Netzbetreiber vorhält.

Aus Sicht des Mobilfunknetzes 6 handelt es sich bei dem Media-Gateway 3-5 um eine Einrichtung mit einer Vielzahl von Mobilfunkendgeräten, da dieses SIM-Karten und Funkmodule aufweist. Alternativ wäre es auch möglich, eine Verbindung vom Internet 4 in das Mobilfunknetz 6 über eine Vermittlungsstelle des Mobilfunknetzes 6 bereitzustellen. Dies ist dabei in der Regel mit höheren Kosten verbunden als die direkte Übertragung "von Endgerät zu Endgerät" des Mobilfunknetzes. Derartige Mobilfunk-Gateways sind allgemein beispielsweise in der EP 1 432 257 A1 beschrieben.

Das Media-Gateway 3-5 der Figur 2 weist zum IP-Netz eine erste IP-Schnittstelle 10, 30 und eine zweite Schnittstelle 20, 40 zum GSM-Netz auf. Die erste Schnittstelle weist ein Hardware-Modul 10, beispielsweise ein Ethernet-Modul 10 oder alternativ beispielsweise ein ATM-Modul oder ein xDSL-Modul auf. Des Weiteren weist sie ein Software-Modul 30 auf, die die Datenübertragung über das Hardware-Modul 10 von und zum Internet steuert. Die Datenübertragung über das Internet erfolgt dabei beispielsweise auf den Ebenen 3 und 4 des OSI-Referenzmodells entsprechend dem Standard TCP/IP. Über ein MGCP-Modul des Moduls 30 kann dieses mit dem Media-Gateway-Controller'5 kommunizieren. Insbesondere werden unter diesem Protokoll Signalisierungsbefehle von und zum Media-Gateway-Controller 5 gesandt, die beispielsweise festlegen, mit welcher Adresse an das IP-Netz gesandte Datenpakete versehen werden.

Die zweite Schnittstelle 20, 40 zum GSM-Netz weist ebenfalls ein Hardware-Modul auf, das mehrere GSM-Funkmodule (auch als GSM-Engines bezeichnet) sowie eine erforderliche Anzahl von SIM-Karten aufweist. Ein Funkmodul und eine SIM-Karte stellen jeweils einen Mobilfunkkanal bereit. Die zweite Schnittstelle weist des Weiteren ein Software-Modul 40 auf, das die durch das Hardware-Modul 20 bereitgestellten Mobilfunkkanäle steuert. Beispielsweise werden bestimmte Mobilfunkkanäle auf- und abgebaut. Die Kommunikation zwischen dem Software-Modul 40 und dem Hardware-Modul 20 erfolgt über ein proprietäres Protokoll (zweites Protokoll), das beispielsweise Befehle ähnlich den AT-Befehlen in der Modem-Programmierung verwendet. Das Protokoll ist insofern proprietär und entspricht nicht "typischen Schnittstellen", als das Mobilfunk-Gateway 3-5 wie erläutert einen Netzzugang zu einem Mobilfunknetz durch Bereitstellen einer Vielzahl von "Endgeräten" des Mobilfunknetzes bereitstellt.

Es wird darauf hingewiesen, dass das GSM-Media-Gateway 3-5 optional zusätzlich einen Vermittlungsautomat 50 aufweisen kann. Dies ist insbesondere dann sinnvoll, wenn das Media-Gateway zusätzlich mit einem PSTN-Netz 2 verbunden ist (in Figur 1 nicht dargestellt). Der Vermittlungsautomat fungiert dann zusätzlich als Switch zum PSTN-Netz.

Es wird weiter darauf hingewiesen, dass das Media-Gateway 3-5 weitere Komponenten 70 aufweisen kann, die nicht im Einzelnen dargestellt sind. Beispielsweise kann das Gateway 3-5 zusätzlich einen Decoder/Encoder besitzen, der Daten für Sprache, SMS etc. in IP-Pakete abbildet bzw. für eine Übertragung über das GSM-Netz abbildet.

Es ist nun anzustreben, dass - entsprechend der Philosophie des "soft-switching" - der Media-Gateway-Controller 5 auch die vollständige Steuerung des GSM-Media-Gateways 3-5 übernimmt. Hierzu ist es erforderlich, dass das MGCP-Protokoll (erstes Protokoll) mit der GSM-Schnittstelle 20, 40 kommuniziert und eine Steuerung der GSM-Kanäle des Media-Gateways übernimmt. Dies ist jedoch nicht ohne Weiteres möglich, da das proprietäre Protokoll der Schnittstelle vom MGCP-Protokoll nicht erkannt wird bzw. die GSM-Schnittstelle 20, 40 keine Signalisierungsbefehle an den Media-Gateway-Controller senden kann, die dieser versteht.

Zur Beseitigung dieses Problems weist das Gateway 3-5 des Weiteren ein Konvertierungsmodul 60 auf. Dieses konvertiert die proprietären Steuerbefehle der Schnittstelle 20, 40 in Signalisierungsbefehle eines Protokolls (drittes Protokoll) um, das dem MGCP-Protokoll bekannt ist. Beispielsweise werden die entsprechenden Steuerbefehle in Steuerbefehle gemäß den bekannten Protokollen SS7 oder DSS1 (Q.931) umgewandelt. Das Protokoll Q.931 legt die Signalisierung im ISDN fest. Im Leitungsvermittlungsnetz selbst erfolgt die Signalisierung mittels des SS7-Signalisierungssystems. Das Konvertierungsmodul 60 konvertiert dabei nicht nur die Steuerbefehle des GSM-Moduls in entsprechende Befehle des weiteren Protokolls, sondern erzeugt ggf. zusätzliche Signalisierungsbefehle, die im weiteren Protokoll erforderlich sind, in dem proprietären Protokoll jedoch nicht enthalten sind.

Das Konvertierungsmodul 60 simuliert und emuliert somit eine Signalisierung, die dem MGCP-Protokoll bekannt ist. Emuliert werden dabei solche Nachrichten, die keine Entsprechung im proprietären Befehlssatz haben.

Die Schnittstelle 30 und darin das MGCP-Modul erkennt nun die Signalisierungsbefehle des weiteren Protokolls, das das Konvertierungsmodul 60 bereitstellt. Es kann auf diese Weise eine Signalisierung mit dem Media-Gateway-Controller 5 erfolgen und dieser kann insbesondere die Mobilfunkkanäle der GSM-Schnittstelle steuern.

Dies wird wie beschrieben dadurch erreicht, dass die Steuersignale der Schnittstelle auf Steuersignale eines Protokolls abgebildet werden, das das MGCP-Protokoll des Media-Gateway-Controllers kennt und mit dem es kommunizieren kann.

Die verwendete Architektur ermöglicht es beispielsweise, dass Rufe über das GSM-Media Gateway 3-5 als VoIP-Rufe an das Internet 4 geleitet oder VoIP Rufe durch das GSM-Netz terminiert werden, wobei ein soft-switching des GSM-Media Gateway 3-5 bzw. der GSM-Kanäle durch den Media Gateway Controller 5 erfolgt. Statt Sprachrufen können in entsprechender Weise auch andere Verbindungen, wie etwa zur Übersendung von SMS (Short Messaging Service)- oder MMS (Multimedia Messaging Service)-Nachrichten realisiert werden.

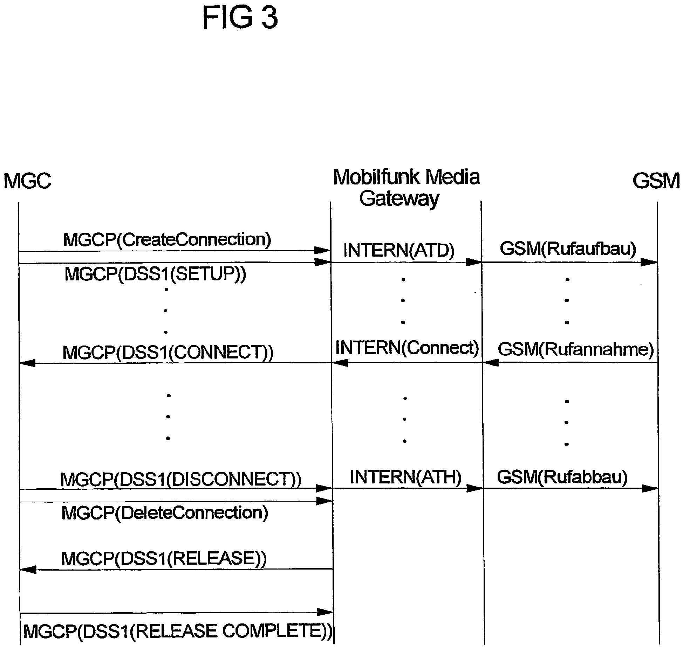

Die Figur 3 zeigt beispielhaft die verwendeten Signalisierungs- und Steuerbefehle der verwendeten Protokolle für den Fall eines Rufs aus dem paketvermittelten IP-Netz 4 an ein Endgerät eines GSM-Netzes 6. Die Figur 3 zeigt dabei die Signalisierung zwischen dem Media-Gateway-Controller 5, dem Mobilfunk-Media-Gateway 3-5 und dem GSM-Netz 6, mit dem der gerufene GSM-Endteilnehmer verbunden ist. Zwischen dem Media-Gateway-Controller 5 und dem Mobilfunk-Gateway 3-5 werden Daten entsprechend dem MGCP-Protokoll übertragen. Zwischen dem Mobilfunk-Gateway 3-5 und dem GSM-Netz werden Daten entsprechend einem GSM-Signalisierungsprotokoll übertragen. Zum Steuern der Mobilfunkkanäle des Mobilfunk-Gateways 3-5 wird ein internes Protokoll verwendet, das lokale Steuerbefehle INTERN (Befehl) aufweist.

Wie bereits erläutert, werden die internen Steuerbefehle INTERN (Befehl) in dem Konvertierungsmodul 60 des Mobilfunk-Gateways (vgl. Fig. 2) in Signalisierungsbefehle eines weiteren Protokolls, im dargestellten Beispiel des Protokolls DSS1 abgebildet und werden in umgekehrter Richtung DSS1-Signalisierungsbefehle auf lokale Steuerbefehle des Mobilfunk-Gateways abgebildet.

Gemäß der Figur 3 empfängt das Mobilfunk-Gateway 3-5 einen Ruf aus dem paketvermittelten Netz 4. Hierzu wird eine MGCP-Nachricht "MGCP (createconnection)" zum Anschalten eines Sprachkanals an das Mobilfunk-Gateway gesandt. Das Mobilfunk-Gateway depaketiert und paketiert (je nach Übertragungsrichtung) daraufhin den Sprachkanal.

Des weiteren wird - eingebettet in eine weitere MGCP-Nachricht "MGCP (DSS1 (SETUP))" - eine DSS1-Setup-Nachricht an das Gateway gesandt. Das Mobilfunk-Gateway bzw. das darin enthaltene Konvertierungsmodul 60 extrahiert aus dem erhaltenen MGCP-Signalisierungsbefehl "MGCP (DSS1 (Setup))" den DSS1-Befehl "DSS1 (SETUP)" und wandelt diesen zusammen mit den relevanten Parametern wie Zielrufnummer und Dienstmerkmale in einen internen Steuerbefehl "INTERN (ATD)" um. Dieser interne Steuerbefehl wird zur Steuerung eines GSM-Funkmoduls der Schnittstelle 20 verwendet. Es wird von dem entsprechenden GSM-Funkmodul dann ein GSM-Steuerbefehl "GSM (Rufaufbau)" an das GSM-Netz übersandt.

In umgekehrter Reihenfolge werden bei einer erfolgten Rufannahme entsprechende Signalisierungsbefehle "GSM (Rufannahme)", "INTERN (Connect)" und "MGCP (DSS1 (Connect))" an das Mobilfunk-Gateway 3-5 und an den Media-Gateway-Controller 5 gesandt. Im Mobilfunk-Gateway wird dabei der interne Steuerbefehl "INTERN (Connect)" des proprietären Gateway-Protokolls in den Befehl "DSS1 (Connect)" umgewandelt. Der Befehl "Connect" des DSS1-Protokolls wird an das MGCP-Protokoll übergeben und dann als MGCP-Nachricht "MGCP (DSS1 (Connect))" an den Media Gateway Controller 5 gesandt.

Dabei wird darauf hingewiesen, dass die Übergabe oder Weitergabe des vom Mobilfunk-Gateway 3-5 simulierten bzw. emulierten Signalisierungsbefehls des weiteren Protokolls an das MGCP-Protokoll (oder in umgekehrter Richtung) grundsätzlich auf zwei Arten erfolgen kann. Zum einen kann vorgesehen sein, dass der Steuerbefehl des weiteren (dritten) Protokolls, im Beispiel des DSS1-Protokolls, auf einen entsprechenden Steuerbefehl des (ersten) Protokolls des Media-Gateway-Controllers, im Beispiel des MGCP-Protokolls, abgebildet wird, also eine erneute Abbildung bzw. Zuordnung von Steuerbefehlen der entsprechenden Protokolle erfolgt. Zum anderen kann vorgesehen sein, dass der Steuerbefehl des weiteren (z.B. DSS1-) Protokolls lediglich in einen MGCP-Steuerbefehl eingebettet bzw. integriert wird. Beispielsweise stellt der MGCP-Steuerbefehl einen definierten MGCP-Header bereit, an den sich dann der DSS1-Steuerbefehl als Inhalt des Datenpaktes anschließt. Das MGCP-Protokoll dient bei dieser Variante lediglich einer Verkapselung des DSS1-Steuerbefehls bei der Übertragung über das Paketvermittlungsnetz.

Welche dieser Varianten eingesetzt wird, ist allerdings unerheblich. Es kommt lediglich darauf an, dass die Signalisierungs- und Steuerbefehle zwischen den Media-Gateway-Controller und dem Mobilfunk-Gateway entsprechend einem geeigneten Protokoll, im Ausführungsbeispiel dem MGCP-Protokoll übertragen werden, die Signalisierungsbefehle des weiteren Protokolls (im Beispiel des DSS1-Protokolls) aus den MGCP-Befehlen extrahiert oder von diesen abgebildet werden und die die Signalisierungsbefehle des weiteren auf Signalisierungsbefehle des internen Mobilfunk-Gateway-Protokolls abgebildet werden bzw. umgekehrt.

Die Figur 3 zeigt auch die entsprechenden Steuerbefehle beim Rufabbau. Der Steuerbefehl "MGCP (DSS1 (Disconnect))" wird zum Mobilfunk-Gateway übertragen, dort in den Steuerbefehl "INTERN (ATH)" umgewandelt und zum GSM-Netz wird ein Steuerbefehl "GSM (Rufabbau) ausgesandt. Der Befehl "MGCP (Delete (Connection))" schaltet den Sprachnutzkanal ab. Es folgen die Befehle "MGCP (DSS1 (release))" und "MDCP (DSS1 (Release Complete).

Die Erfindung beschränkt sich in ihrer Ausgestaltung nicht auf das vorstehend dargestellte Ausführungsbeispiel. Wesentlich für die Erfindung ist allein, dass die Steuerbefehle einer Schnittstelle eines Media-Gateways, die das von einem Media-Gateway-Controller verwendete Protokoll zunächst nicht verstehen kann, auf entsprechende Steuerbefehle eines dem Media-Gateway-Controllers bekannten Protokolls, wie SS7 oder DSS1, abgebildet werden, so dass der Media-Gateway-Controller Steueraufgaben des Media Gateways wahrnehmen kann.

## Patentansprüche

1. Verfahren zur Steuerung eines Gateways, das ein erstes Kommunikationsnetz (6) und ein zweites Kommunikationsnetz (4) miteinander verbindet, wobei
- das zweite Kommunikationsnetz (4) ein erstes Protokoll zur Signalisierung von Verbindungen aufweist,
- das Gateway (3-5) eine erste Schnittstelle (20, 40) zum ersten Kommunikationsnetz (6) und eine zweite Schnittstelle (10, 30) zum zweiten Kommunikationsnetz (4) aufweist,
**dadurch gekenntzeichnet**, dass
- die Steuerung der ersten Schnittstelle (20, 40) mit Steuerbefehlen eines zweiten, proprietären Protokolls der Schnittstelle (20, 40) erfolgt,
- das Gateway (3-5) die Steuerbefehle des zweiten Protokolls auf Signalisierungsbefehle eines dritten Protokolls abbildet, die dem ersten Protokoll bekannt sind und/oder die in das erste Protokoll integriert werden, so dass
- eine Steuerung des Gateways (3-5) mittels Signalisierungsbefehlen des ersten Protokolls erfolgen kann, wobei
- die erste Schnittstelle (20, 40) eine Mobilfunk-Schnittstelle ist, die einen oder eine Mehrzahl von Mobilfunk-Kanälen verwaltet, und
- das Gateway (3-5) eine Mehrzahl von Einsteckkarten aufweist, die eine Zuordnung und Anmeldung zu bzw. bei einem Mobilfunknetz (6) ermöglichen, sowie eine Mehrzahl von Funkmodulen, die jeweils zusammen mit einer Einsteckkarte einen Mobilfunkkanal realisieren, wobei die erste Schnittstelle (20, 40) die Mobilfunkkanäle steuert.

2. Verfahren nach Anspruch 1, **dadurch gekenntzeichnet**, dass das zweite Kommunikationsnetz (4) ein Paketvermittlungsnetz ist und das erste Protokoll der externen Steuerung des Gateways (3-5) durch einen Media-Gateway Controller (5) im/am Paketvermittlungsnetz (4) dient.

3. Verfahren nach Anspruch 2, **dadurch gekennzeichnet, dass** als erstes Protokoll das Protokoll MGCP, das Protokoll H.248, das Protokoll Megaco, das Protokoll SIGTRAN oder das Protokoll SIP-T verwendet wird.

4. Verfahren nach mindestens einem der Ansprüche 1 bis 3, **dadurch gekennzeichnet, dass** das erste Kommunikationsnetz (6) ein Mobilfunknetz und das zweite Kommunikationsnetz das Internet (4) ist.

5. Verfahren nach mindestens einem der Ansprüche 1 bis 3, **dadurch gekennzeichnet, dass** das dritte Protokoll das SS7-Protokoll oder das DSS1-Protokoll ist.

6. Verfahren nach mindestens einem der Ansprüche 1 bis 5, **dadurch gekennzeichnet, dass** das Verfahren zur Verbindungssteuerung von Telefongesprächen oder Telefonnachrichten, insbesondere zur Realisierung einer VoIP-Telefonie eingesetzt wird.

7. Verfahren nach mindestens einem der Ansprüche 1 bis 6, **dadurch gekennzeichnet, dass** Gateway (3-5) Signalisierungsbefehle des dritten Protokolle, die keine Entsprechung im zweiten Protokoll besitzen, bei der Abbildung von Steuerbefehlen des zweiten Protokolls auf Signalisierungsbefehle des dritten Protokolls emuliert.

8. Gateway zur Durchführung des Verfahrens nach Anspruch 1, das aufweist:
- eine erste Schnittstelle (20, 40) zu einem ersten Kommunikationsnetz (6) und eine zweite Schnittstelle (10, 30) zu einem zweiten Kommunikationsnetz (4), **gekennzeichnet durch**
- Mittel (60), die Steuerbefehle eines zweiten, proprietären Protokolls der ersten Schnittstelle (20, 40) auf Signalisierungsbefehle eines dritten Protokolls abbilden, die einem ersten Protokoll des zweiten Kommunikationsnetzes (4) bekannt sind und/oder die in das erste Protokoll integriert werden , wobei
- die erste Schnittstelle (20, 40) eine Mobilfunk-Schnittstelle ist, die einen oder eine Mehrzahl von Mobilfunk-Kanälen verwaltet,
- das Gateway (3-5) eine Mehrzahl von Einsteckkarten aufweist, die eine Zuordnung und Anmeldung zu bzw. bei einem Mobilfunknetz ermöglichen, sowie eine Mehrzahl von Funkmodulen, die jeweils zusammen mit einer Einsteckkarte einen Mobilfunkkanal realisieren, und
- die erste Schnittstelle (20, 40) Mittel zur Steuerung der Mobilfunkkanäle aufweist.

9. Gateway nach Anspruch 8, **dadurch gekennzeichnet, dass** die Mittel (60) das dritte Protokoll simulieren und/oder emulieren.

10. Gateway nach Anspruch 8 oder 9, **dadurch gekennzeichnet, dass** das erste Protokoll der externen Steuerung des Gateways (3-5) durch einen Media-Gateway Controller (5) dient.

11. Gateway nach mindestens einem der Ansprüche 8 bis 10, **dadurch gekennzeichnet, dass** die zweite Schnittstelle (10, 30) eine IP-Schnittstelle ist.

12. Gateway nach mindestens einem der Ansprüche 8 bis 11, **dadurch gekennzeichnet, dass** die Mittel (60) durch eine Software bereitgestellt werden.

13. Gateway nach mindestens einem der Ansprüche 8 bis 12, **dadurch gekennzeichnet, dass** das Gateway (3-5) zusätzlich eine Decoder/Encoder (70) für Sprache und/oder Textnachrichten aufweist.

14. Gateway nach mindestens einem der Ansprüche 8 bis 13, **dadurch gekennzeichnet, dass** das Gateway (3-5) zusätzlich einen Vermittlungsautomat (50) zum Vermitteln von leitungsvermittelten Verbindungen aufweist.

15. Gateway nach mindestens einem der Ansprüche 8 bis 14, **dadurch gekennzeichnet, dass** das Gateway ein Mobilfunk-Media-Gateway ist, das mindestens ein Mobilfunknetz und das Internet miteinander verbindet.

## Claims

1. Method for controlling a gateway which joins together a first communication network (6) and a second communication network (4), wherein
- the second communication network (4) has a first protocol for signalling connections,
- the gateway (3-5) has a first interface (20, 40) to the first communication network (6) and a second interface (10, 30) to the second communication network (4),
**characterized in that**
- the first interface (20, 40) is controlled by means of control commands of a second, proprietary protocol of the interface (20, 40),
- the gateway (3-5) maps the control commands of the second protocol onto signalling commands of a third protocol which are known to the first protocol and/or which are integrated into the first protocol, so that
- the gateway (3-5) can be controlled by means of signalling commands of the first protocol, wherein
- the first interface (20, 40) is a mobile radio interface which administers one or a plurality of mobile radio channels, and
- the gateway (3-5) has a plurality of plug-in cards which provide for allocation to and registration in a mobile radio network (6), and a plurality of radio modules which in each case, together with a plug-in card, implement a mobile radio channel, wherein the first interface (20, 40) controls the mobile radio channels.

2. Method according to Claim 1, **characterized in that** the second communication network (4) is a packet-switching network and the first protocol is used for externally controlling the gateway (3-5) by means of a media gateway controller (5) in/at the packet-switching network (4).

3. Method according to Claim 2, **characterized in that** the first protocol used is the MGCP protocol, the H.248 protocol, the Megaco protocol, the SIGTRAN protocol or the SIP-T protocol.

4. Method according to at least one of Claims 1 to 3, **characterized in that** the first communication network (6) is a mobile radio network and the second communication network is the Internet (4).

5. Method according to at least one of Claims 1 to 3, **characterized in that** the third protocol is the SS7 protocol or the DSS1 protocol.

6. Method according to at least one of Claims 1 to 5, **characterized in that** the method is used for controlling the connection of telephone calls or telephone messages, particularly for implementing VoIP telephony.

7. Method according to at least one of Claims 1 to 6, **characterized in that** the gateway (3-5) emulates signalling commands of the third protocol which do not have equivalence in the second protocol, during the mapping of control commands of the second protocol onto signalling commands of the third protocol.

8. Gateway for carrying out the method according to Claim 1, which has:
- a first interface (20, 40) to a first communication network (6) and a second interface (10, 30) to a second communication network (4),
**characterized by**
- means (60) which map control commands of a second, proprietary protocol of the first interface (20, 40) onto signalling commands of a third protocol which are known to a first protocol of the second communication network (4) and/or which are integrated into the first protocol, wherein
- the first interface (20, 40) is a mobile radio interface which administers one or a plurality of mobile radio channels,
- the gateway (3-5) has a plurality of plug-in cards which provide for allocation to and registration in a mobile radio network, and a plurality of radio modules which in each case, together with a plug-in card, implement a mobile radio channel, and
- the first interface (20, 40) has means for controlling the mobile radio channels.

9. Gateway according to Claim 8, **characterized in that** the means (60) simulate and/or emulate the third protocol.

10. Gateway according to Claim 8 or 9, **characterized in that** the first protocol is used for externally controlling the gateway (3-5) by means of a media gateway controller (5).

11. Gateway according to at least one of Claims 8 to 10, **characterized in that** the second interface (10, 30) is an IP interface.

12. Gateway according to at least one of Claims 8 to 11, **characterized in that** the means (60) are provided by software.

13. Gateway according to at least one of Claims 8 to 12, **characterized in that** the gateway (3-5) additionally has a decoder/encoder (70) for voice and/or text messages.

14. Gateway according to at least one of Claims 8 to 13, **characterized in that** the gateway (3-5) additionally has an automatic switch (50) for switching circuit-switched connections.

15. Gateway according to at least one of Claims 8 to 14, **characterized in that** the gateway is a mobile radio media gateway which joins together at least one mobile radio network and the Internet.

## Revendications

1. Procédé servant à commander une passerelle, qui relie un premier réseau de communication (6) et un deuxième réseau de communication (4) entre eux, sachant que
- le deuxième réseau de communication (4) comporte un premier protocole servant à signaler des liaisons,
- la passerelle (3-5) comporte une première interface (20, 40) vers le premier réseau de communication (6) et une deuxième interface (10, 30) vers le deuxième réseau de communication (4)
**caractérisé en ce que**
- la commande de la première interface (20, 40) s'effectue à l'aide d'instructions de commande d'un deuxième protocole exclusif de l'interface (20, 40),
- la passerelle (3-5) reproduit les instructions de commande du deuxième protocole sur des instructions de signalisation d'un troisième protocole, qui sont connues du premier protocole et/ou qui sont intégrées dans le premier protocole, de telle sorte
- qu'une commande de la passerelle (3-5) peut s'effectuer au moyen d'instructions de signalisation du premier protocole, sachant que
- la première interface (20, 40) est une interface de radiotéléphonie mobile, qui administre un canal ou une pluralité de canaux de radiotéléphonie mobile, et
- la passerelle (3-5) présente une pluralité de cartes enfichables, qui permettent une association à un réseau de téléphonie mobile (6) et un enregistrement de session dans ce dernier, ainsi qu'une pluralité de modules radio, qui respectivement forment conjointement avec une carte enfichable un canal de téléphonie mobile, la première interface (20, 40) commandant les canaux de téléphonie mobile.

2. Procédé selon la revendication 1, **caractérisé en ce que** le deuxième réseau de communication (4) est un réseau de commutation de paquets, et **en ce que** le premier protocole est destiné à la commande externe de la passerelle (3-5) par un contrôleur de passerelle multimédia (5) dans/sur le réseau de commutation de paquets (4).

3. Procédé selon la revendication 2, **caractérisé en ce qu'**on utilise comme premier protocole le protocole MGCP, le protocole H.248, le protocole Megaco, le protocole SIGTRAN ou le protocole SIP-T.

4. Procédé selon au moins l'une quelconque des revendications 1 à 3, **caractérisé en ce que** le premier réseau de communication (6) est un réseau de téléphonie mobile, et **en ce que** le deuxième réseau de communication est Internet (4).

5. Procédé selon au moins l'une quelconque des revendications 1 à 3, **caractérisé en ce que** le troisième protocole est le protocole SS7 ou le protocole DSS1.

6. Procédé selon au moins l'une quelconque des revendications 1 à 5, **caractérisé en ce qu'**on utilise le procédé de gestion de communication de conversations téléphoniques ou de messages téléphoniques, en particulier de prise en charge d'une téléphonie VoIP.

7. Procédé selon au moins l'une quelconque des revendications 1 à 6, **caractérisé en ce que** la passerelle (3-5) émule des instructions de signalisation du troisième protocole, qui ne trouvent aucune correspondance dans le deuxième protocole, lors de la reproduction d'instructions de commande du deuxième protocole sur des instructions de signalisation du troisième protocole.

8. Passerelle servant à mettre en oeuvre le procédé selon la revendication 1, laquelle présente :
- une première interface (20, 40) vers un premier réseau de communication (6) et une deuxième interface (10, 30) vers un deuxième réseau de communication (4), **caractérisée par**
- des moyens (60) qui représentent des instructions de commande d'un deuxième protocole propriétaire de la première interface (20, 40) sur des instructions de signalisation d'un troisième protocole, qui sont connues du premier protocole du deuxième réseau de communication (4) et/ou qui sont intégrées dans le premier protocole, sachant que
- la première interface (20, 40) est une interface de téléphonie mobile, qui administre un canal ou une pluralité de canaux de téléphonie mobile,
- la passerelle (3-5) comporte une pluralité de cartes enfichables, qui permettent une association au réseau de téléphonie mobile et une ouverture de session dans ce dernier, ainsi qu'une pluralité de modules de radiotéléphonie, qui forment respectivement conjointement avec une carte enfichable un canal de téléphonie mobile, et
- la première interface (20, 40) comporte des moyens de commande des canaux de téléphonie mobile.

9. Passerelle selon la revendication 8, **caractérisée en ce que** les moyens (60) simulent et/ou émulent le troisième protocole.

10. Passerelle selon la revendication 8 ou 9, **caractérisée en ce que** le premier protocole est destiné à la commande externe de la passerelle (3-5) par un contrôleur de passerelle multimédia (5).

11. Passerelle selon au moins l'une quelconque des revendications 8 à 10, **caractérisée en ce que** la deuxième interface (10, 30) est une interface IP.

12. Passerelle selon au moins l'une quelconque des revendications 8 à 11, **caractérisée en ce que** les moyens (60) sont mis à disposition par un logiciel.

13. Passerelle selon au moins l'une quelconque des revendications 8 à 12, **caractérisée en ce que** la passerelle (3-5) présente en complément un système de décodage/encodage (70) de signaux vocaux et/ou de messages textuels.

14. Passerelle selon au moins l'une quelconque des revendications 8 à 13, **caractérisée en ce que** la passerelle (3-5) présente en complément un automate de commutation (50) servant à commuter des liaisons commutées.

15. Passerelle selon au moins l'une quelconque des revendications 8 à 14, **caractérisée en ce que** la passerelle est une passerelle multimédia de téléphonie mobile, laquelle relie entre eux au moins un réseau de téléphonie mobile et Internet.
